# EUROPÄISCHE PATENTSCHRIFT

(11) **EP 0 375 865 B1**
(45) Veröffentlichungstag und Bekanntmachung des Hinweises auf die Patenterteilung: **26.01.1994**
(21) Anmeldenummer: 89119387.2
(22) Anmeldetag: 19.10.1989
(51) Int. Cl.: H05B 1/02, A47J 37/08

(54) **Brotröster**
Bread toaster
Grille-pain

(30) Priorität: 24.12.1988 DE 3843947
(43) Veröffentlichungstag der Anmeldung: 04.07.1990
(73) Patentinhaber: Braun Aktiengesellschaft, Frankfurt am Main (DE)
(72) Erfinder: Kelterborn, Heinz, D-6367 Karben 3 (DE); Schiebelhuth, Heinz, D-6000 Frankfurt am Main 50 (DE)

(56) Entgegenhaltungen:
- EP-A- 0 276 089
- DE-A- 1 515 042
- US-A- 4 645 909

## Beschreibung

Die Erfindung betrifft einen Brotröster nach dem Oberbegriff des Patentanspruchs 1.

Es sind Brotröster bekannt, die neben dem eigentlichen Röstvorgang eines durch eine Ein- und Ausgabeöffnung in die Röstkammer des Brotrösters eingebrachten Röstgutes außerhalb der Röstkammer auch das Aufbacken von Backgut ermöglichen. Dazu wird das Backgut auf eine Haltevorrichtung gelegt, die an der Oberseite des Brotrösters über der Ein- und Ausgabeöffnung angebracht ist (vgl. zum Beispiel DE-GM 69 04 032). Beim Aufbacken des Backgutes befindet sich kein Röstgut in der Röstkammer, wodurch die aus der Röstkammer aufsteigende Warmluft und die darin von einer Heizvorrichtung erzeugte Infrarotstrahlung durch die Ein- und Ausgabeöffnung zu dem auf der Haltevorrichtung liegenden, aufzubackenden Backgut - beispielsweise einem Brötchen - gelangen kann.

Die Aufbackzeit für das betreffende Backgut wird bei dem bekannten Brotröster mit den gleichen Mitteln eingestellt, wie die Röstzeit für ein zu röstendes Brötchen. Bei den meisten bekannten Brotröstern wird die Beendigung des Röstvorgangs durch eine reine Zeitsteuerung und oft unter Verwendung von Bimetallelementen (vgl. zum Beispiel DE-PS 17 53 119) vorgenommen, wobei der Benutzer des Brotrösters die Zeiteinstellung anhand von aus der Praxis gewonnener Erfahrungswerte vornimmt.

Neben der Verwendung von Bimetallelementen ist es auch bereits bekannt, die Zeitsteuerung bei gattungsgemäßen Brotröstern auf elektronischem Wege durchzuführen. So ist es beispielsweise aus der Zeitschrift "Siemens-Components" 22 (1984) Heft 1, Seiten 18 bis 21 (vgl. dort die Bilder 22 und 23 samt zugehöriger Beschreibung) bekannt, einen programmierbaren digitalen Langzeit-Timer (Siemens-Typenbezeichnung SAB 0529) zu verwenden, der über einen integrierten Codierschalter die Einstellung von Röstzeiten zwischen 30 Sekunden und 4 Minuten zuläßt. Der Beginn des Röstvorgangs wird dadurch festgelegt, daß der Langzeit-Timer nach der manuellen Inbetriebnahme des Brotrösters zwei die Heizvorrichtung mit ihrer Spannungsversorgung verbindenden Kontakte mit Hilfe eines Magneten geschlossen hält. Nach Ablauf der eingestellten Röstzeit wird der Magnet zur Beendigung des Röstvorgangs durch den Langzeit-Timer wieder stromlos gemacht, wodurch sich die beiden Kontakte wieder öffnen und die Heizvorrichtung wieder von ihrer Spannungsversorgung getrennt wird.

Darüber hinaus ist auch ein Brotröster bekannt (vgl. DE-AS 15 15 042), bei dem der Benutzer anstelle einer durch Erfahrung ermittelten Röstzeit direkt den gewünschten Röstgrad des Röstgutes einstellen kann, nach dessen Erreichen der Brotröster, unabhängig von der Röstzeit, selbsttätig außer Betrieb gesetzt wird. Zum Zweck der Steuerung des Röstvorgangs weist dieser bekannte Brotröster einen im infraroten Strahlungsbereich empfindlichen Sensor auf, der die von der Oberfläche des Röstgutes ausgehende Infrarotstrahlung empfängt und einer Vergleichsschaltung ein daraus abgeleitetes Sensorsignal zuführt und den Brotröster über eine Schaltstufe nach Erreichen eines festlegbaren Signalpegels außer Betrieb ist.

Dabei ist ohne weiteres möglich, die bekannte Vergleichsschaltung derart zu erweitern, daß an ihr verschiedene Signalpegel für das Sensorsignal und damit verschiedene Röstgrade einstellbar sind, nach deren Erreichen die Vergleichsschaltung jeweils ein Röstzeit-Steuersignal abgibt, welches den Brotröster außer Betrieb setzt.

Soll bei einem derartigen mit einem Sensor ausgerüsteten Brotröster ein Backgut außerhalb der Röstkammer über dem Ein- und Ausgabeschlitz des Brotrösters aufgebacken werden, so besteht folgende Schwierigkeit:

Da die Röstkammer des Brotrösters kein Röstgut enthält, empfängt der Sensor Infrarotstrahlung, die direkt von der Heizvorrichtung kommend auf ihn auftrifft. Aufgrund der Tatsache, daß die Temperatur der Heizvorrichtung nach der Inbetriebnahme des Brotrösters nach kurzer Anlaufzeit eine Temperatur zwischen 800 - 1000°C aufweist, während der Röstvorgang bei einem Röstgut bereits dann abgebrochen wird, wenn dieses eine Temperatur von etwa 160°C aufweist, wird der Sensor auch bei Einstellung des höchstmöglichen Signalpegels schon nach kurzer Zeit ein derart großes Sensorsignal abgeben, daß die Heizvorrichtung des Brotrösters außer Betrieb gesetzt wird. Die dadurch entstehende, relativ kurze Betriebszeit des Brotrösters reicht aber nicht aus, um ein über dem Ein- und Ausgabeschlitz des Brotrösters angebrachtes Backgut in dem erwünschten Maße aufzubacken.

Es war daher Aufgabe der Erfindung, einen Brotröster nach dem Oberbegriff des Patentanspruches 1 so auszugestalten, daß die Betriebszeit des Brotrösters bei leerer Röstkammer nicht durch die vom Sensor empfangene Infrarotstrahlung gesteuert wird und damit zu kurz ausfällt, sondern daß die Betriebszeit des Brotrösters in diesem Fall zum Zweck des vollständigen Aufbackens eines außerhalb der Röstkammer über der Ein- und Ausgabeöffnung angebrachten Backguts ausreichend lange ausgedehnt wird.

Diese Aufgabe wird für einen Brotröster nach dem Oberbegriff des Patentanspruchs 1 durch die in dessen kennzeichnenden Teil angegebenen Merkmale gelöst.

Nach der Erfindung weist der Brotröster neben einer Vergleichsschaltung für die Steuerung des Röstgrades eines Röstguts auch noch eine Steuerschaltung auf, die dafür sorgt, daß der Benutzer des Brotrösters keinerlei zusätzliche Maßnahmen treffen muß, wenn er statt des durch den Sensor selbsttätig gesteuerten Röstvorganges eines Röstgutes auf einer über der Ein- und Ausgabeöffnung des Brotrösters angebrachten Haltevorrichtung beispielsweise ein Brötchen, aufbacken möchte. Die Steuerschaltung des erfindungsgemäßen Brotrösters bestimmt nämlich selbsttätig, ob die Betriebszeit des Brotrösters durch die vom Sensor empfangene Infrarotstrahlung gesteuert wird oder ob der Brotröster zum Aufbacken des betreffenden Backgutes ausreichend lange in Betrieb bleiben muß.

Der erfindungsgemäße Brotröster weist den Vorteil auf, daß er neben einem durch einen Sensor gesteuerten Röstvorgang eines innerhalb der Röstkammer sich befindlichen Röstgutes auch uneingeschränkt zum Aufbacken eines außerhalb der Röstkammer angeordneten Backgutes verwendet werden kann. Beim Vergleich des Referenzsignals mit dem Sensorsignal zu einem ersten festlegbaren Zeitpunkt wird die Tatsache ausgenutzt, daß die Signalpegel von beliebigen, bei Röstvorgängen praktisch möglichen Sensorsignalen und das Sensorsignal bei leerer Röstkammer unterschiedliche Größenordnungen aufweisen. Dieser Vergleich führt somit in allen praktisch denkbaren Fällen zur Wahl der richtigen Betriebsart, d.h. Röstbetrieb oder Aufbackbetrieb. Darüber hinaus wird der erfindungsgemäße Brotröster für den Fall, daß er sich in der Betriebsart "Aufbackbetrieb" befindet, immer für die gleiche Zeitspanne in Betrieb genommen, während der Aufbackvorgang bei den aus dem Stand der Technik bekannten Brotröstern nach deren mehrmaliger Inbetriebnahme aufgrund der Erhitzung der verwendeten Bimetallelemente laufend verkürzt wird.

Eine besonders vorteilhafte Ausführungsform des erfindungsgemäßen Brotrösters wird durch die Verwendung eines Timers geschaffen (Anspruch 2), der zu dem ersten festlegbaren Zeitpunkt ein erstes Timersignal und weiterhin ein zweites Timersignal abgibt, welches die Zeitdauer festlegt, während der der Brotröster im Aufbackbetrieb arbeitet. Das Sensorsignal wird bei dieser Ausführungsform des erfindungsgemäßen Brotrösters zusammen mit dem Referenzsignal einem zweiten Komparator zugeführt, dessen Ausgangssignal wiederum einer zweiten Koppelstufe zugeführt wird, an der gleichzeitig auch das erste Timersignal anliegt. Wird der ersten Koppelstufe noch ein Speicher-Flip-Flop nachgeschaltet, so ist es auf einfache und preiswerte Weise möglich, das zu dem ersten festlegbaren Zeitpunkt erhaltene Ergebnis des Vergleiches zwischen Sensorsignal und Referenzsignal und damit die Betriebsart "Aufback- oder Röstbetrieb" zu speichern.

Eine weitere vorteilhafte Ausgestaltung des erfindungsgemäßen Brotrösters besteht darin (Anspruch 3), auch das Referenzsignal durch ein vom Timer abgegebenes, drittes Timersignal steuern zu lassen, indem es zum einen während eines bestimmten Zeitintervalls nach Inbetriebnahme des Brotrösters in einer Baugruppe erzeugt wird und zum anderen nach Ablauf des Zeitintervalls mit dem Sensorsignal verglichen wird. Dadurch ist es möglich, den Vergleich zwischen Sensorsignal und Referenzsignal zu einem Zeitpunkt vorzunehmen, zu dem die mit dem Aufback- bzw. Röstbetrieb verbundenen Sensorsignale besonders charakteristische Unterschiede aufweisen.

Wird nach Anspruch 4 die Baugruppe einerseits aus einem RC-Glied und andererseits aus einem Komparator gebildet, der während des Zeitintervalls als Verstärker mit der Verstärkung V = 1 arbeitet, wird mit einfachsten und billigsten Mitteln erreicht, daß unmittelbar nach Ablauf des Zeitintervalls an beiden Eingängen des zweiten Komparators der augenblickliche Pegel des Sensorsignals anliegt und im weiteren Zeitverlauf ein gut reproduzierbares Referenzsignal erzeugt wird, welches am Pluseingang des zweiten Komparators anliegt.

Um die Reproduzierbarkeit des zeitlichen Verlaufs des Referenzsignals noch weiter zu verbessern, ist es vorteilhaft (Anspruch 5), für den Kondensator einen reststromarmen Elektrolytkondensator zu wählen. Dadurch wird sichergestellt, daß, wenn sich der Kondensator über einen einen relativ großen Widerstandswert aufweisenden Entladewiderstand entlädt, eine nur vernachlässigbare Verfälschung des Referenzsignals durch einen im Kondensator selbst fließenden Reststromanteil eintreten kann.

Eine vorteilhafte Weiterbildung der Erfindung besteht darin, die am Plusanschluß des Kondensators anliegende Spannung mittels einer Zenerdiode zu stabilisieren (Anspruch 6). Damit ist es auf einfache und billige Weise möglich, auch bei einer in weiten Grenzen schwankenden Versorgungsspannung des Brotrösters stabile Referenzsignale zu erzeugen und damit sicherzustellen, daß die jeweils vorliegende Betriebsart (Röst- oder Aufbackbetrieb) des Brotrösters von dessen Steuerschaltung richtig detektiert wird.

Um sicherzustellen, daß die Steuerschaltung auch bei dem im praktischen Gebrauch kaum denkbaren Fall eines extrem großen Sensorsignalpegels funktionsfähig bleibt, besteht eine vorteilhafte Ausführungsform der Erfindung (Anspruch 7) darin, die Steuerschaltung um eine Klemmschaltung zu erweitern, die verhindert, daß der Spannungswert am Minusanschluß des Elektrolytkondensators größer werden kann als der Spannungswert an dessen Pluanschluß.

Auf einfache und billige Weise (Anspruch 8) läßt sich die Klemmschaltung dadurch realisieren, daß eine Diode mit ihrer Kathode an einen Spannungsteiler und mit ihrer Anode an den Ausgang des in der Baugruppe enthaltenen Komparators angeschlossen wird.

Um einerseits den der Baugruppe zugehörigen Kondensator während des Zeitintervalls praktisch vollständig aufzuladen und um andererseits nach Ablauf des Zeitintervalls ein weitgehend linear mit der Zeit ansteigenden Referenzsignal zu erzielen, wird gemäß Anspruch 9 der Kondensator während des Zeitintervalls über einen ersten Widerstand mit relativ kleinem Widerstandswert aufgeladen, während es sich danach ab dem ersten festlegbaren Zeitpunkt über einen vergleichsweise großen Widerstand nur wenig entladen kann.

Es hat sich herausgestellt, daß, wenn man gemäß Anspruch 10 das Zeitintervall mit etwa 4 sec. und den ersten festlegbaren Zeitpunkt mit 8 sec. wählt und weiter die Zeitkonstante des aus dem ersten Widerstand und dem Kondensator bestehenden RC-Gliedes in der Größenordnung von 10⁻¹ sec. und die Zeitkonstante des aus dem Kondensator und dem Entladewiderstand bestehenden RC-Gliedes in der Größenordnung von 100 sec. liegt, der Vergleich des Referenzsignals mit dem Sensorsignal in allen praktisch denkbaren Fällen den Brotröster in die richtige Betriebsart versetzt.

Wird der erfindungsgemäße Brotröster so weitergebildet, daß der Timer zusätzlich noch ein viertes Timersignal abgibt (Anspruch 11), welches zusammen mit dem zweiten Timersignal je einem Eingang einer dritten Koppelstufe und einem der beiden Eingänge einer vierten Koppelstufe zugeführt wird, ergibt sich im Röstbetrieb der Vorteil, daß der Brotröster zum Zeitpunkt des zweiten Wechsels des Pegels des zweiten Timersignals von LOW nach HIGH Zeitspanne zwangsläufig außer Betrieb gesetzt wird. Auf diese Weise wird bei einem Ausfall des Sensors oder anderen Gründen, die zu einem nicht für die Außerbetriebsetzung des Brotrösters ausreichenden Signalpegel des Sensorsignals führen, verhindert, daß der Brotröster beliebig lange in Betrieb bleibt und die damit verbundenen Nachteile - wie Verkohlung des Röstgutes samt der damit verbundenen Geruchsbelästigung und eine Überhitzung des Brotrösters - vermieden werden.

Die Ausführungsform eines Brotrösters nach Anspruch 12 stellt eine einfache und billige Weiterbildung dar, mit der das Speicher-Flip-Flop in seinen Speicherzustand gebracht werden kann, aus dem es durch einen Wechsel des Signalpegels an nur einem seiner beiden Eingänge in den invertierten Zustand versetzt werden kann.

Die erfindungsgemäße Steuerschaltung ist so ausgelegt, daß sämtliche Koppelstufen als NAND-Gatter ausgebildet werden können (Anspruch 13). Damit kommt man für die Koppelstufen mit einfachsten, handelsüblichen Schaltgliedern aus, was den Herstellungspreis der Steuerschaltung günstig beeinflußt.

Es hat sich in praktischen Versuchen gezeigt, daß das Backgut in den allermeisten Fällen bereits nach einer Betriebszeit von etwa 1 min. (Anspruch 14) ausreichend aufgebacken ist. Praktische Versuche haben weiterhin ergeben, daß die Unterteilung des Aufbackbetriebes des Brotrösters in 1-Minuten-Intervalle zu Backgut führt, welches sich nach einem weiteren Backvorgang zwar genügend vom vorhergegangenen Aufbackvorgang unterscheidet, und dennoch nicht die Gefahr besteht, daß das Backgut durch nur einen weiteren Aufbackzyklus bereits verbrannt oder gar verkohlt wird.

Nachfolgend wird ein Ausführungsbeispiel der Erfindung anhand der Zeichnung näher beschrieben. Es zeigen:
- Fig. 1:: ein Blockschaltbild des die Vergleichsschaltung und die Steuerschaltung enthaltenden Schaltkreises,
- Fig. 2:: ein detaillierteres Schaltbild zum Blockschaltbild nach der Fig. 1,
- Fig. 3:: ein Impulsdiagramm der vier von einem in der Steuerschaltung nach den Fig. 1 und 2 enthaltenen Timer abgegebenen Timersignale und
- Fig. 4:: den prinzipiellen Verlauf des Sensorsignals beim Rösten bzw. Aufbacken eines Röst- bzw. Backgutes und den Verlauf des zugehörigen Referenzsignals bei der Steuerschaltung nach den Fig. 1 und 2.

Zur klareren Unterscheidung von einzelnen Schaltzuständen der Vergleichsschaltung und der Steuerschaltung. wird im folgenden zum einen vom Röstbetrieb gesprochen, wenn in der Röstkammer des Brotrösters ein Röstgut, beispielsweise eine Brotscheibe, eingeführt worden ist. Zum anderen wird dann, wenn auf einer über der Ein- und Ausgabeöffnung des Brotrösters angeordneten Haltevorrichtung ein Backgut gelegt wird, vom Aufbackbetrieb gesprochen.

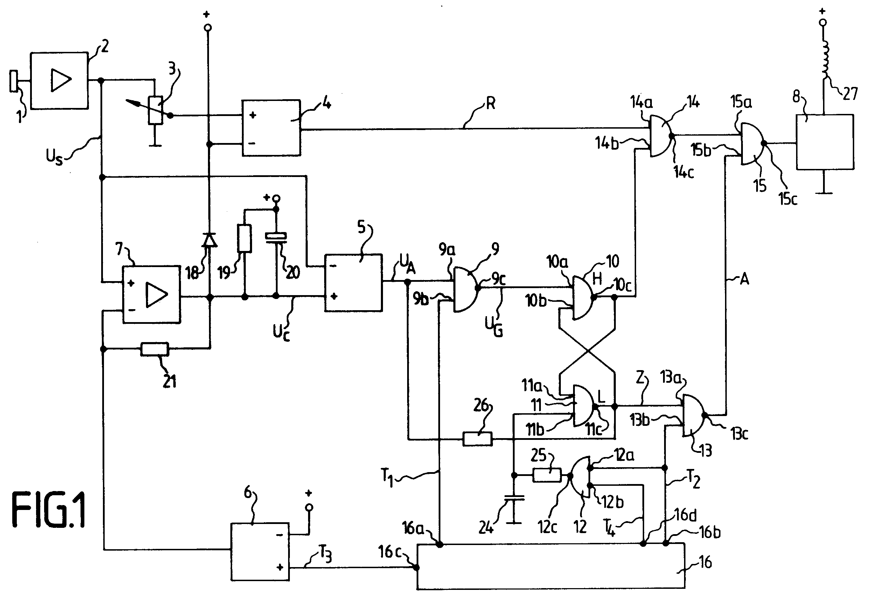

Beim Röstbetrieb detektiert ein Sensor 1 (vgl. Fig. 1) die von der Oberfläche einer nicht dargestellten Brotscheibe abgestrahlte Infrarotstrahlung, wobei die Brotscheibe von einer ebenfalls nicht dargestellten, in der Röstkammer angeordneten Heizvorrichtung mit Infrarotstrahlung beaufschlagt und dadurch geröstet wird. Beim Brötchenbetrieb, das heißt ohne eingelegte Brotscheibe in der Röstkammer trifft Infrarotstrahlung direkt von der Heizvorrichtung auf den Sensor 1 auf, weshalb die vom Sensor 1 empfangene Intensität wesentlich schneller ansteigt und einen wesentlich höheren Endwert erreicht, als dies bei einer in der Röstkammer eingelegten Brotscheibe der Fall ist. Das vom Sensor 1 an einen nachgeschalteten Verstärker 2 abgegebene Signal wird über ein Potentiometer 3 dem Pluseingang eines ersten Komparators 4 zugeführt. An den Minuseingang des ersten Komparators 4 wird eine Bezugsspannung gelegt.

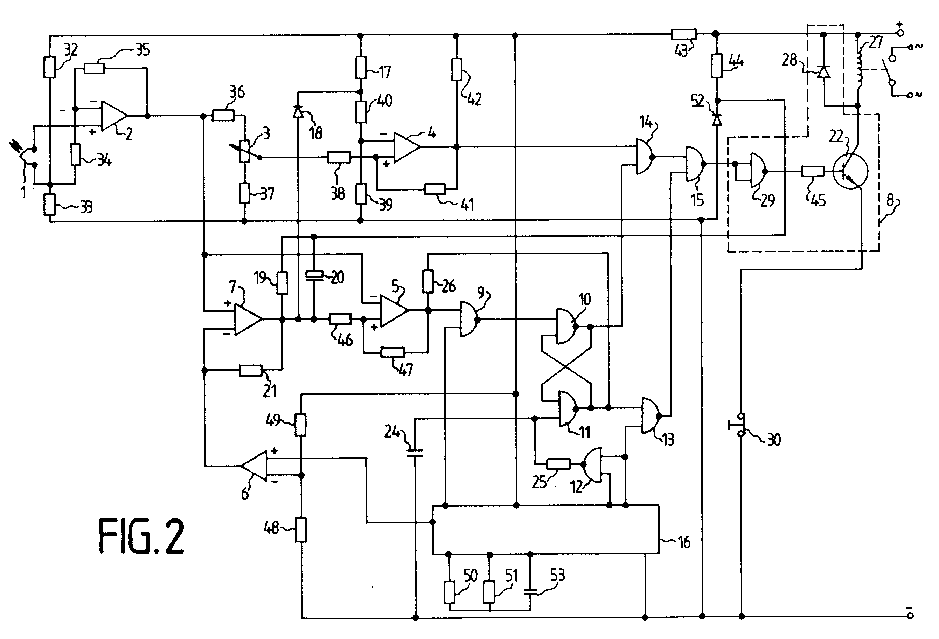

Fig. 2 zeigt im einzelnen die Beschaltung des Verstärkers 2 und des ersten Komparators 4. Dabei dienen Widerstände 34 und 35 zur Festlegung des Verstärkungsfaktors des Verstärkers 2, während ein für den Betrieb des Sensors verwendeter Spannungsteiler durch zwei Widerstände 32 und 33 gebildet wird. Dem Potentiometer 3 ist ein Widerstand 36 vor- und ein Widerstand 37 nachgeschaltet. Der Widerstand 36 bildet einen Vorwiderstand, während der Widerstand 37 bewirkt, daß für den ersten Komparator 4 keine Spannung von null Volt einstellbar ist.

Der erste Komparator 4 ist mit Widerständen 17, 38, 39, 40, 41 und 42 beschaltet, die einerseits zu seiner Gegenkopplung dienen und andererseits einen Spannungsteiler für die an seinem Minuseingang anliegende Bezugsspannung bilden. Die Bezugsspannung am Minuseingang des ersten Komparators 4 liegt beispielsweise bei plus 2,6 V.

Übersteigt das am Ausgang des Verstärkers 2 abgegebene Sensorsignal Uₛ die Bezugsspannung, schaltet der erste Komparator 4 ausgangsseitig von LOW auf HIGH. Das auf diese Weise gewonnene Röstzeit-Steuersignal R wird einem Eingang 14a einer ersten Koppelstufe 14 zugeführt, deren Ausgang 14c an einem Eingang 15a eines NAND-Gatters 15 liegt, dessen Ausgang 15c seinerseits am Eingang einer Schaltstufe 8 liegt.

Wie wiederum aus Fig. 2 ersichtlich ist, weist die Schaltstufe 8 im wesentlichen einen npn-Transistor 22 auf, der basisseitig über einen Widerstand 45 mit einem als Inverter geschalteten NAND-Gatter 29 verbunden ist. Im Emitterzweig des Transistors 22 liegt ein Schalter 30, der zur Notabschaltung des Brotrösters dient, die vom Benutzer jederzeit vorgenommen werden können muß. Weiter weist die Schaltstufe 8 einen Haltemagneten 27 auf, der während der Betriebszeit des Brotrösters einen für die Auflage eines Röstguts dienenden, nicht dargestellten Schlitten in bekannter Weise innerhalb der Röstkammer des Brotrösters arretiert. Der Spule des Haltemagneten 27 ist eine Freilaufdiode 28 zum Schutz des Transistors 22 vor den mit dem Öffnen des Haltemagneten 27 verbundenen Spannungsspitzen parallelgeschaltet. Mit der Freigabe des Haltemagneten 27 wird der Schlitten und gegebenenfalls eine von diesem gehaltene Brotscheibe aus der Röstkammer herausbewegt und die Heizvorrichtung von ihrer Spannungsversorgung getrennt, womit der Röstvorgang beendet ist.

Mittels des Potentiometers 3 wird die Höhe des Sensorsignals Uₛ die und damit der Röstgrad eines in der Röstkammer befindlichen Röstgutes festgelegt. Die Röstdauer ergibt sich dabei aus der Zeitspanne, die verstreicht, bis das ansteigende Sensorsignal Uₛ die Bezugsspannung am Minuseingang des ersten Komparators 4 übersteigt.

Da es sich bei der ersten Koppelstufe 14 um ein NAND-Gatter handelt, bleibt der Ausgang 14c des NAND-Gatters 14, unabhängig von dem an seinem zweiten Eingang 14b anliegenden Signalpegel, zumindest solange auf HIGH, solange an seinem ersten Eingang 14a ein LOW-Signal anliegt. Im folgenden wird - wie nachstehend noch begründet wird - davon ausgegangen, daß sowohl an dem zweiten Eingang 14b des NAND-Gatters 14 als auch an dem zweiten Eingang 15b des NAND-Gatters 15 ein HIGH-Signalpegel anliegen soll. Wechselt unter dieser Voraussetzung das Ausgangssignal des ersten Komparators 4 aufgrund der Tatsache, daß das Sensorsignal Uₛ die an seinem Minuseingang anliegende Bezugsspannung übersteigt von LOW auf HIGH, so wechselt zum einen das Signal am Ausgang 14c der ersten Koppelstufe 14 von HIGH auf LOW und zum anderen das Signal am Ausgang 15c des NAND-Gatters 15 von LOW auf HIGH. Dieser Signalwechsel am Eingang der Schaltstufe 8 hat zur Folge, daß der Haltemagnet 27 von seiner Spannungsversorgung getrennt wird und den Schlitten freigibt. Damit wird der Brotröster außer Betrieb gesetzt.

Nachdem bisher die prinzipielle Funktionsweise der Vergleichsschaltung beschrieben worden ist, wird im folgenden anhand der Figur 1 die prinzipielle Funktionsweise der Steuerschaltung beschrieben. Wesentlicher Bestandteil der Steuerschaltung ist ein aus zwei NAND-Gattern 10 und 11 bestehendes Speicher-Flip-Flop. Unmittelbar nach der Inbetriebsetzung des Brotrösters befindet sich das Speicher-Flip-Flop 10, 11 im Grundzustand, in dem sein Eingang 10a und sein Ausgang 11c einen HIGH-Pegel aufweisen, während sein Eingang 11b und sein Ausgang 10c auf LOW-Pegel liegen. Der Ausgang 10c des Speicher-Flip-Flops 10, 11 ist dabei mit dem zweiten Eingang 14b der ersten Koppelstufe 14 verbunden, während sein Ausgang 11c mit dem ersten Eingang 13a einer dritten, aus einem NAND-Gatter 13 bestehenden Koppelstufe verbunden ist.

Der Zustand des Speicher-Flip-Flops 10, 11 wird wesentlich durch die von einem Timer 16 an seinen Ausgängen 16a, 16b, 16c und 16d abgegebenen, periodischen Signale bestimmt, die mit der Inbetriebnahme des Brotrösters alle mit LOW-Pegel beginnen und nach der halben Periodendauer zum ersten Mal auf HIGH-Pegel wechseln. An seinem Ausgang 16a gibt der Timer 16 ein erstes Timersignal T₁ ab, dessen Pegel acht Sekunden nach Inbetriebnahme des Brotrösters von LOW auf HIGH wechselt (Periodendauer damit 16 sec.), während er an seinem zweiten Ausgang 16b ein zweites Timersignal T₂ abgibt, dessen Pegel nach einer Minute auf HIGH wechselt. Weiterhin gibt der Timer an seinem dritten Ausgang 16c ein drittes Timersignal T₃ ab, das nach vier Sekunden von LOW- auf HIGH-Pegel wechselt, während er schließlich an seinem vierten Ausgang 16d ein viertes Timersignal T₄ abgibt, dessen Pegel nach zwei Minuten von LOW auf HIGH wechselt.

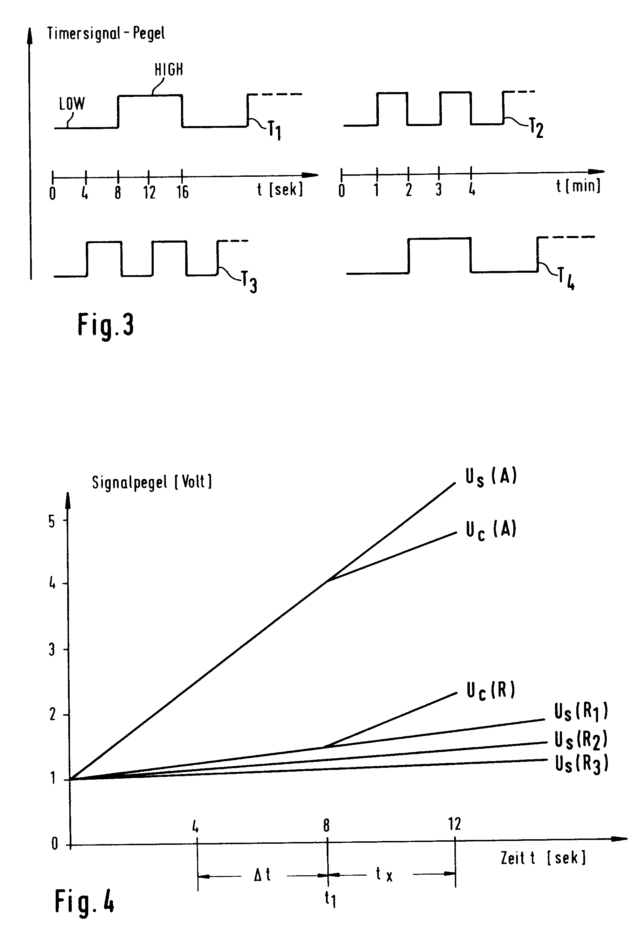

Sämtliche Timersignale T₁ bis T₄ sind der besseren Übersichtlichkeit wegen in der Fig. 3 noch einmal graphisch dargestellt.

Durch die Beschaltung des Timers 16 mit entsprechenden Bauelementen, beispielsweise mit zwei Widerständen 50 und 51 und einem Kondensator 50, die an drei seiner anderen Ausgänge angeschlossen werden, können die verschiedenen Timersignale hinsichtlich ihrer zeitlichen Abfolge variiert werden.

Sowohl das zweite Timersignal T₂ als auch das vierte Timersignal T₄ werden den beiden Eingängen 12a bzw. 12b einer vierten, aus einem NAND-Gatter bestehenden Koppelstufe 12, deren Ausgang 12c über ein aus einem Widerstand 25 und einem Kondensator 24 bestehenden Zeitglied mit dem Eingang 11b des Speicher-Flipflops verbunden ist. Da beide Eingänge des NAND-Gatters 12 unmittelbar nach der Inbetriebnahme des Brotrösters auf LOW liegen, weist dessen Ausgang 12c einen HIGH-Pegel auf. Da weiterhin unmittelbar nach der Inbetriebnahme des Brotrösters die gesamte Spannung am Ausgang 12c des NAND-Gatters am Widerstand 25 abfällt, weist der Eingang 11b des Speicher-Flip-Flops zu diesem Zeitpunkt einen LOW-Pegel auf.

Das dritte Timersignal T₃ am Ausgang 16c des Timers 16 wird dem Pluseingang eines dritten Komparators 6 zugeführt, dessen Minuseingang über einen Spannungsteiler aus Widerständen 49 und 48 eine Vergleichsspannung zugeführt wird (vgl. Fig. 2). Bei geeigneter Dimensionierung der Widerstände 48 und 49 ist der Ausgang des dritten Komparators 6, der mit dem Minus-Eingang eines Komparators 7 verbunden ist, an dessen Plus-Eingang wiederum das verstärkte Sensorsignal Uₛ anliegt, während eines Zeitintervalls Δt = 4 sec., innerhalb dessen das dritte Timersignal T₃ auf HIGH-Pegel liegt (vgl. Fig. 3), gesperrt. Der Komparator 7, dessen Ausgang mit dem Plus-Eingang des zweiten Komparators 5 verbunden ist, arbeitet dabei als Verstärker mit der Verstärkung V = 1. Das an seinem Plus-Eingang anliegende verstärkte Sensorsignal Uₛ wird daher während dieses Zeitintervalls an seinem Ausgang übernommen. Liegt dagegen das dritte Timersignal T₃ außerhalb des Zeitintervalls Δt auf LOW, befindet sich der Ausgang des dritten Komparators 6 wieder in leitendem Zustand.

Der Verbindungsleitung von Komparator 7 und Pluseingang des zweiten Komparators 5 ist ein Widerstand 19 und ein reststromarmer Elektrolytkondensator 20 parallelgeschaltet, während am Minus-Eingang des zweiten Komparators 5 wiederum das verstärkte Sensorsignal Uₛ anliegt.

Durch geeignete Dimensionierung von in der Fig. 2 dargestellten Widerstände 44, 21 und 48 liegt sowohl der Minus- als auch der Plusanschluß des Elektrolytkondensators 20 unmittelbar nach Inbetriebnahme des Brotrösters zur Zeit t = 0 auf dem Niveau der über eine Zenerdiode 52 stabilisierten Versorgungsspannung. Während des Zeitintervalls Δt = 4 sec. wird der Elektrolytkondensator 20 über einen Widerstand 44 aufgeladen, da an seinem Minusanschluß dann der augenblickliche Signalpegel der verstärkten Sensorspannung Uₛ anliegt. Dies hat zur Folge, daß unmittelbar nach Ablauf des Zeitintervalls Δt zum Zeitpunkt t₁ (vgl. Fig. 3), zu dem das dritte Timersignal T₃ von HIGH wieder auf LOW wechselt, an beiden Eingängen des zweiten Komparators 5 der augenblickliche Pegel des verstärkten Sensorsignals Uₛ anliegt.

Die für den Aufladungsvorgang des Elektrolytkondensators 20 maßgebliche Zeitkonstante wird durch dessen Kapazität und durch den Widerstandswert des Widerstands 44 bestimmt und beträgt beispielsweise 10⁻¹ sec. bei einer Kapazität des Elektrolytkondensators 20 von 100 µF und einem Widerstandswert des Widerstands 44 von einem 1K Ω.

Durch den zum Zeitpunkt t₁ eintretenden Wechsel des dritten Timersignals T₃ von HIGH nach LOW und dem damit verbundenen Wechsel des Ausgangs des dritten Komparators 6 vom gesperrten in den leitenden Zustand, arbeitet der Komparator 7 nicht mehr als Verstärker, was zur Folge hat, daß sich der Elektrolytkondensator 20 über den Widerstand 19 wieder entlädt.

Daher hängt der Pegel des Ausgangssignals U_{A} des zweiten Komparators 5 gemäß Fig. 3 nach Ablauf der Zeit t = t₁ = 8 sec. bis zum Zeitpunkt Δt = 12 sec. (dadurch definierte Zeitspanne tₓ= 4 sec) davon ab, ob das Sensorsignal Uₛ oder ein durch die Entladung des Elektrolytkondensators 20 gebildetes Referenzsignal U_{c} am Pluseingang des zweiten Komparators 5 größer ist.

Die zeitliche Änderung des Referenzsignals U_{c} hängt dabei von der durch den Widerstand 19 und durch den Elektrolytkondensator 20 bestimmten Zeitkonstante für den Entladevorgang ab, während die Größe des Sensorsignals Uₛ maßgeblich davon abhängt, ob sich in der Röstkammer ein Röstgut befindet oder nicht. Durch geeignete Wahl der Zeitkonstanten, z.B. bei der gegebenen Kapazität des Elektrolytkondensators 20 von 100 µF und der Wahl eines Widerstandswertes von 1,2 M Ω für den Widerstand 19 einerseits und der Beschaltung des Verstärkers 2 andererseits ist es möglich, den in der Fig. 4 prinzipiell dargestellten Verlauf von Referenzsignal U_{c} und Sensorsignal Uₛ zu erhalten.

Fig. 4 zeigt auf ihrer horizontalen Achse die Zeit in Sekunden und auf ihrer vertikalen Achse den prinzipiellen Verlauf der Signale U_{c} und Uₛ. Dabei bedeuten Uₛ(R₁), Uₛ(R₂) und Uₛ(R₃) das Sensorsignal, das beim Einbringen von verschiedenem Röstgut R₁, R₂ oder R₃ in die Röstkammer erhalten wird, während Uₛ (A) den Verlauf des Sensorsignales wiedergibt, wenn sich kein Röstgut in der Röstkammer befindet und der Brotröster daher zum Aufbacken eines Backgutes verwendet wird. U_{c} entspricht dem am Pluseingang des zweiten Komparators 5 anliegenden Referenzsignal, das mit der zum Zeitpunkt t = t₁ = 8 sec. beginnenden Entladung des Elektrolytkondensators 20 ansteigt.

Aus dem in der Fig. 4 gezeigten prinzipiellen Verlauf des Sensorsignals Uₛ und des Referenzsignals U_{c}(A) für den Aufbackbetrieb bzw. U_{c}(R) für den Röstbetrieb ergibt sich, daß während der Zeitspanne tₓ bei allen praktisch denkbaren Betriebszuständen des Brotrösters eine charakteristische Größenordnung für alle drei gezeigten Signalarten vorliegt. Das heißt im einzelnen, daß innerhalb der Zeitspanne tₓ für den Fall, daß sich ein Röstgut in der Röstkammer befindet, alle auftretenden Sensorsignale Uₛ(R) unterhalb des Spannungswertes des Referenzsignals U_{c}(R) liegen und daß innerhalb derselben Zeitspanne dann, wenn sich kein Röstgut in der Röstkammer befindet, das entsprechende Sensorsignal Uₛ(A) grundsätzlich größer ist als das Referenzsignal U_{c}(A). Das am Pluseingang des zweiten Komparators 5 anliegende Referenzsignal U_{c} und das an seinem Minuseingang anliegende Sensorsignal Uₛ eignen sich daher während der Zeitspanne tₓ als zuverlässiges Kriterium dafür, ob der Brotröster zum Rösten eines in seiner Röstkammer befindlichen Röstgutes oder zum Aufbacken eines Backgutes verwendet wird. Daher werden das Ausgangssignal U_{A} des zweiten Komparators 5 und das zum Zeitpunkt t₁ = 8 sec. von LOW- auf HIGH-Pegel wechselnde, am Ausgang 16a des Timers 16 abgegebene erste Timersignal T₁ in einer aus einem NAND-Gatter bestehenden zweiten Koppelstufe 9 miteinander verglichen.

Dieser Vergleich liefert, unabhängig davon, ob das verstärkte Sensorsignal Uₛ zur Zeit t = 0 noch einen relativ niedrigen Wert (z.B. bei Herstellung des ersten Röstgutes in einer Reihe von Röstvorgängen) oder schon einen höheren Wert (z.B. bei Fortsetzung eines manuell unterbrochenen Röstvorgangs) aufweist, das richtige Ergebnis, da - wie bereits erwähnt - während des Zeitintervalls Δt grundsätzlich der augenblickliche Wert des verstärkten Sensorsignals Uₛ am Ausgang des Komparators 7 übernommen wird.

Weist das dem Eingang 9a der zweiten Koppelstufe 9 zugeführte Ausgangssignal U_{A} einen HIGH-Pegel auf, was heißt, daß sich der Brotröster im Röstbetrieb befindet, so wechselt der Ausgang 9c der zweiten Koppelstufe 9 auf LOW, da am zweiten Eingang 9b dieser Koppelstufe ebenfalls ein HIGH-Signal anliegt.

Weist das Ausgangssignal U_{A} dagegen einen LOW-Pegel auf, was heißt, daß sich der Brotröster im Aufbackbetrieb befindet, so bleibt der Ausgang 9c der zweiten Koppelstufe 9 auf HIGH-Pegel.

Für das Speicher-Flip-Flop 10, 11 gilt für den Aufbackbetrieb folgendes:
Aufgrund der Aufladung des Kondensators 24, wechselt der Signalpegel am Eingang 11b bei geeigneter Wahl der Zeitkonstante (Kondensator 24, Widerstand 25) bereits vor Ablauf des Zeitintervalls Δt = 4 sec. von LOW auf HIGH. Dabei ändert sich an den beiden Ausgängen des Speicher-Flip-Flops aber nichts (Speicherfall). Dies gilt auch für den Zeitpunkt t₁ =8 sec. und für den Zeitraum danach, währenddessen das erste Timersignal T₁ wieder auf LOW-Pegel liegt.

Als Folge der den Aufbackbetrieb kennzeichenden Signalpegel an den beiden Ausgängen 10c und 11c des Speicher-Flip-Flops 10, 11 und unter Berücksichtigung der Tatsache, daß am Eingang 13b des NAND-Gatters 13 nach dem Zeitpunkt t₁ = 8 sec. bis auf weiteres ein LOW-Pegel anliegt, liegt sowohl der Ausgang 13c des NAND-Gatters 13 als auch der Ausgang 14c der ersten Koppelstufe 14 auf HIGH-Pegel, was zur Folge hat, daß der Ausgang 15c des NAND-Gatters 15 auf LOW-Pegel liegt. Dies bedeutet, daß der Brotröster unabhängig vom Pegel des Röstzeit-Steuersignals R am Eingang 14a der ersten Koppelstufe 14 in Betrieb bleibt.

Der Brotröster wird erst durch daß am Ausgang 16b des Timers 16 nach einer Minute von LOW auf HIGH wechselnde zweite Timersignal T₂ außer Betrieb gesetzt, da dann am Ausgang 13a des NAND-Gatters 13 dadurch ein Aufbackzeit-Steuersignal A gebildet wird, daß der Pegel von HIGH nach LOW abfällt, was zur Folge hat, daß der Pegel am Ausgang 15a des NAND-Gatters 15 von LOW auf HIGH ansteigt.

Aus den vorstehend beschrieben Signalfolgen ergibt sich, daß der Brotröster für den Fall, daß er sich nach dem Zeitpunkt t₁ = 8 sec. im Aufbackbetrieb befindet, unabhängig vom Pegel des Röstzeit-Steuersignales R solange in Betrieb gehalten wird, bis er nach einer Minute durch das mit dem zweiten Timersignal T₂ verknüpfte Aufbackzeit-Steuersignal A abgeschaltet wird.

Befindet sich der Brotröster dagegen im Röstbetrieb gilt folgendes:
Vom Grundzustand nach Einschalten des Brotrösters wechselt der Pegel am Eingang 11b des Speicher-Flip-Flops 10, 11 wiederum vor Ablauf des Zeitintervalles Δt₁ = 8 sec. aus den bereits im Zusammenhang mit den Aufbackbetrieb beschriebenen Gründen von LOW auf HIGH. Damit liegt für das Speicher-Flip-Flops 10, 11 wiederum der Speicherfall vor, was zur Folge hat, daß sich an den beiden Ausgängen 10c und 11c die Signalpegel gegenüber dem Grundzustand nicht ändern. Wechselt nun aber am Ausgang 9c der zweiten Koppelstufe 9 nach dem Zeitpunkt t₁ = 8 sec. als Folge des am Ausgang 16a des Timers 16 dem auftretenden ersten Timersignales T₁ der Pegel von HIGH nach LOW, werden die beiden Ausgänge 10c und 11c des Speicher-Flip-Flops 10, 11 neu gesetzt. Das heißt der Ausgang 10c wechselt von LOW auf HIGH, während der Ausgang 11c von HIGH auf LOW wechselt. Die beiden Ausgänge 10c und 11c behalten ihre Signalpegel auch dann bei, wenn der Pegel des ersten Timersignals T₁ wieder von HIGH auf LOW abfällt. Es ist nämlich jetzt der Speicherfall bei gegenüber dem Grundzustand des Speicher-Flip-Flops 10, 11 invertierten Ausgängen eingetreten.

Als Folge der den Röstzeitbetrieb kennzeichenden Signalpegel der beiden Ausgänge 10c und 11c des Speicher-Flipflops 10, 11 und unter Berücksichtigung der Tatsache, daß bis zum Zeitpunkt t₂ = 1 min. am Eingang 13b des NAND-Gatters wie beim Aufbackbetrieb ein LOW-Pegel anliegt, liegt am Ausgang 13c des NAND-Gatters 13 ebenfalls wie beim Aufbackbetrieb ein HIGH-Pegel an. Ebenfalls liegt am Eingang 14b der ersten Koppelstufe 14 ein HIGH-Pegel an.

Es ist daher beim Röstbetrieb - im Gegensatz zum Aufbackbetrieb - entscheidend, ob das am Ausgang des ersten Komperators 4 anliegende Röstzeit-Steuersignal R auf HIGH oder LOW-Pegel liegt. Liegt es auf HIGH-Pegel, was bedeutet, daß der für den gewünschten Röstgrad des Röstgutes mit dem Potentiometer 3 eingestellte Pegel des Sensorsignals Uₛ bereits erreicht ist, so führen die beiden HIGH-Pegel an den Eingängen 14a und 14b dazu, daß am Ausgang 14c der ersten Koppelstufe 14 ein LOW-Signal anliegt. Zusammen mit dem am zweiten Eingang 15b der Schaltstufe 15 anliegenden HIGH-Signal führt das an ihrem ersten Eingang 15a anliegende LOW-Signal dazu, daß der Brotröster außer Betrieb gesetzt wird. Aus den vorstehend beschriebenen Signalfolgen für den Röstbetrieb ergibt sich, daß der Brotröster nach der Zeitspanne tₓ solange in Betrieb bleibt, bis er durch das Röstzeit-Steuersignal R außer Betrieb gesetzt wird.

Der aus den Widerständen 17, 39 und 40 bestehende Spannungsteiler und die Diode 18 (vgl. Fig. 3) verhindern ein ungewolltes Umschalten aus dem Röstbetrieb in den Aufbackbetrieb. Weitere, in Fig. 3 dargestellte Widerstände 21, 26, 43, 46 und 47 dienen zur üblichen Beschaltung von weiteren Spannungsteilern oder von Komparatoren.

Sollte im Röstbetrieb das Signal am Pluseingang des ersten Komparators 4 aus irgendeinem Grund - sei es durch einen Ausfall des Sensors 1 oder des Verstärkers 2 oder dadurch bedingt, daß der Sensor 1 durch irgendeinen Gegenstand von der auf ihn gerichteten Infrarotstrahlung abgeschirmt wird - nicht den durch das Potentiometer 3 festlegbaren Signalpegel erreichen, wird der Brotröster durch das Zusammenwirken des zweiten Timersignals T₂ und vierten Timersignals T₄ nach Ablauf von 3 min. dennoch außer Betrieb gesetzt.

Wechselt nämlich der Pegel des vierten Timersignals T₄ nach Ablauf von 2 min. von LOW auf HIGH und wechselt auch das zweite Timersignal T₂ nach 3 min. wieder von LOW auf HIGH, weisen beide Eingänge 12a, 12b des NAND-Gatters 12 einen HIGH-Pegel auf, während dessen Ausgang 12c auf LOW-Pegel liegt. Der Kondensator 24 entlädt sich daher wieder. Die Zeitkonstante für den Entladevorgang ist dieselbe wie für den Ladevorgang und liegt beispielsweise in der Größenordnung von einigen 10⁻¹ sec. Durch die Entladung des Kondensators 24 wechselt das Signal am Eingang 11b des Speicher-Flip-Flops 10, 11 von HIGH auf LOW, was aufgrund des vorher vorliegenden Speicherfalls zur Folge hat, daß dessen beide Ausgänge 10c bzw. 11c wieder auf LOW- bzw. auf HIGH-Pegel wechseln, womit das Speicher-Flip-Flop 10, 11 sich wieder im Grundzustand befindet. Der HIGH-Pegel am Ausgang 11c des Speicher-Flip-Flops 10, 11 führt zusammen mit dem am Eingang 13b des NAND-Gatters 13 anliegenden HIGH-Signalpegel des zweiten Timersignals T₂ dazu, daß der Ausgang 13c des NAND-Gatters 13 von HIGH auf LOW wechselt.

Der damit am Eingang 15b des NAND-Gatters 15 anliegende LOW-Pegel hat unabhängig vom Pegel an dessen anderem Eingang 15a zur Folge, daß dessen Ausgang 15c einen HIGH-Pegel aufweist, was wiederum zur Folge hat, daß der Brotröster außer Betrieb gesetzt wird. Der Brotröster wird also im Röstbetrieb durch ein vom Ausgang 11c des Speicher-Flip-Flops 10, 11 abgegebenes Zwangsabschalt-Steuersignal Z außer Betrieb gesetzt, wenn es aus den bereits genannten Gründen nicht zu einer Außerbetriebsetzung durch das Röstzeit-Steuersignal R kommen sollte. Dabei ist die Zeitspanne von 3 min. nach Inbetriebnahme des Brotrösters so gewählt, daß auch bei einem beliebigen Röstgut jeder gewünschte Röstgrad bereits deutlich vor Ablauf dieser Zeitspanne erreicht worden sein müßte, so daß das Zwangsabschalt-Steuersignal Z grundsätzlich einen nicht ordnungsgemäßen Röstbetrieb des Brotrösters beendet.

## Patentansprüche

1. Brotröster mit einem Gehäuse, welches mit Ausnahme mindestens einer für ein Röstgut vorgesehenen Ein- und Ausgabeöffnung eine Röstkammer mit einer darin angeordneten Heizvorrichtung fast vollständig umschließt, mit einem im infraroten Strahlungsbereich empfindlichen Sensor (1), der zusammen mit einer Vergleichsschaltung (3, 4, 17) die Röstzeit eines in die Röstkammer eingebrachten Röstguts dadurch steuern kann, daß er die vom beheizten Röstgut ausgehende Infrarotstrahlung empfängt, der Vergleichsschaltung (3, 4, 17) ein daraus abgeleitetes Sensorsignal (Uₛ) zuführt, letzteres in einem ersten Komparator (4) mit einer Bezugsspannung vergleicht, wobei der erste Komparator (4) ein von diesem Vergleich abhängiges Röstzeit-Steuersignal (R) abgibt, das einem ersten Eingang (15a) einer Schaltstufe (8, 15) zugeführt wird, die ihrerseits bei Erreichen eines vom Benutzer des Brotrösters einstellbaren Signalpegels des Sensorsignals (Uₛ) den Brotröster außer Betrieb setzt,
**dadurch gekennzeichnet,**
daß in an sich bekannter Weise über der Ein- und Ausgabeöffnung eine Haltevorrichtung für ein aufzubackendes Backgut anbringbar ist und daß zusätzlich eine Steuerschaltung vorgesehen ist, die das ihr ebenfalls zugeführte Sensorsignal (Uₛ) zu einem ersten festlegbaren Zeitpunkt (t₁) nach Inbetriebnahme des Brotrösters in einem zweiten Komparator (5) mit einem Referenzsignal (U_{c}) vergleicht, wobei der Brotröster für den Fall, daß das Referenzsignal (U_{c}) kleiner als das Sensorsignal (Uₛ) ist, durch ein von der Steuerschaltung zu einem zweiten festlegbaren Zeitpunkt (t₂) erzeugtes und einem zweiten Eingang (15b) der Schaltstufe (8, 15) zugeführtes Aufbackzeit-Steuersignal (A) außer Betrieb gesetzt wird, während im umgekehrten Fall die Außerbetriebsetzung des Brotrösters nach Erreichen des für das Sensorsignal (Uₛ) eingestellten Signalpegels von dem von der Vergleichsschaltung (3, 4, 17) erzeugten Röstzeit-Steuersignal (R) ausgelöst wird und daß das jeweilige Röstzeit-Steuersignal (R) und ein vom jeweiligen Ausgangssignal (U_{A}) des zweiten Komparators (5) abgeleitetes Signal einer der Schaltstufe (8, 15) vorgeschalteten ersten Koppelstufe (14) zugeführt wird, die dafür sorgt, daß die Schaltstufe (8, 15) im Röstbetrieb nur auf Änderungen des Röstzeit-Steuersignal (R) und im Aufbackbetrieb nur auf Änderungen des Aufbackzeit-Steuersignals (A) empfindlich ist.

2. Brotröster nach Anspruch 1,
**dadurch gekennzeichnet**,
daß die Steuerschaltung einen Timer (16) aufweist, der mit der Inbetriebnahme des Brotrösters zur Zeit t = 0 an einem ersten Ausgang (16a) ein erstes periodisches Timersignal (T₁), und an einem zweiten Ausgang (16b) ein zweites periodisches Timersignal (T₂) abgibt, deren Pegel jeweils mit LOW beginnen und zu dem ersten (t₁) bzw. zweiten (t₂) festlegbaren Zeitpunkt auf HIGH wechseln, wobei beide Timersignale (T₁, T₂) jeweils eine gleiche Impuls- und Pausendauer aufweisen, und daß die Steuerschaltung einen zweiten Komparator (5) aufweist, dessen Minuseingang das Sensorsignal (Uₛ) und dessen Pluseingang das Referenzsignal (U_{c}) zugeführt wird und dessen Ausgangssignal (U_{A}) einem ersten Eingang (9a) einer zweiten Koppelstufe (9) zugeführt wird, deren zweiter Eingang (9b) mit dem ersten Ausgang (16a) des Timers (16) verbunden ist und daß das Ausgangssignal (U_{G}) der zweiten Koppelstufe (9) einem ersten Eingang (10a) eines Speicher-Flip-Flops (10, 11) zugeführt wird, dessen erster Ausgang (10c) mit dem zweiten Eingang (14b) der ersten Koppelstufe (14) verbunden ist.

3. Brotröster nach Anspruch 2,
**dadurch gekennzeichnet**,
daß der Timer (16) mit der Inbetriebnahme des Brotrösters an einem dritten Ausgang (16c) ein drittes, periodisches und gleiche Impuls- und Pausendauer aufweisendes Timersignal (T₃) abgibt, dessen Pegel ebenfalls mit LOW beginnt und für die Dauer eines Zeitintervalls (Δt) auf HIGH-Pegel liegt, und daß die Steuerschaltung eine Baugruppe (7, 44, 19, 20) enthält, die am Pluseingang des zweiten Komparators (5) während des Zeitintervalls (Δt) das Sensorsignal (Uₛ) übernimmt und nach dessen Ablauf das Referenzsignal (U_{c}) erzeugt.

4. Brotröster nach Anspruch 3,
**dadurch gekennzeichnet**,
daß die Baugruppe (7, 44, 19, 20) einen Kondensator (20) enthält, dessen Plusanschluß über einen ersten Widerstand (44) mit der Betriebsspannung und dessen Minusanschluß mit dem Ausgang eines Komparators (7) verbunden ist, daß die Baugruppe (7, 44, 19, 20) einen dem Kondensator (20) parallelgeschalteten zweiten Widerstand (19) aufweist, und daß der Komparator (7) während des Zeitintervalls (Δt) ein mit der Verstärkung V = 1 arbeitender Verstärker ist, dessen Pluseingang das Sensorsignal (Uₛ) zugeführt wird und dessen Minuseingang mit dem Ausgang eines dritten Komparators (6) verbunden ist, an dessen Plus-Eingang das dritte Timersignal (T₃) und an dessen Minus-Eingang eine Vergleichsspannung anliegt und der innerhalb des Zeitintervalls (Δt) ausgangsseitig gesperrt ist.

5. Brotröster nach Anspruch 4,
**dadurch gekennzeichnet**,
daß der Kondensator (20) ein reststromarmer Elektrolytkondensator ist.

6. Brotröster nach Anspruch 4,
**dadurch gekennzeichnet**,
daß die am Plusanschluß des Kondensators (20) anliegende Spannung mittels einer Zenerdiode (52) stabilisiert wird.

7. Brotröster nach Anspruch 5,
**dadurch gekennzeichnet**,
daß an den Ausgang des Komparators (7) eine Klemmschaltung angeschlossen ist, die verhindert, daß der Spannungswert am Minusanschluß des Elektrolytkondensators (20) größer werden kann als der Spannungswert an dessen Plusanschluß.

8. Brotröster nach Anspruch 7,
**dadurch gekennzeichnet**,
daß die Klemmschaltung aus einer Diode (18) besteht, die mit ihrer Kathode an einem Spannungsteiler (17, 40, 39) und mit ihrer Anode an den Ausgang des Komparators (7) angeschlossen ist.

9. Brotröster nach Anspruch 4,
**dadurch gekennzeichnet**,
daß der bei einer Aufladung des Kondensators (20) wirksame erste Widerstand (44) einen derartigen Widerstandswert aufweist, daß die entsprechende Zeitkonstante klein gegenüber dem Zeitintervall (Δt) ist und daß der bei einer Entladung des Kondensators (20) wirksame zweite Widerstand (19) einen derartigen Widerstandswert hat, daß die entsprechende Zeitkonstante groß gegenüber dem Zeitintervall (Δt) ist.

10. Brotröster nach Anspruch 9,
**dadurch gekennzeichnet**,
daß das Zeitintervall (Δt) 4 Sekunden und der erste festlegbare Zeitpunkt (t₁) 8 Sekunden beträgt, daß weiter die Zeitkonstante des aus dem ersten Widerstand (44) und dem Kondensator (20) bestehenden RC-Glieds in der Größenordnung von 10⁻¹ sec. liegt, während die Zeitkonstante des aus dem Kondensator (20) und seinem Entladewiderstand (19) bestehenden RC-Glieds in der Größenordnung von 100 sec. liegt.

11. Brotröster nach Anspruch 2,
**dadurch gekennzeichnet**,
daß der Timer (16) an einem vierten Ausgang (16d) ein viertes Timersignal (T₄) abgibt, welches in seiner Signalform dem zweiten Timersignal (T₂) entspricht, aber die doppelte Periodendauer aufweist und dem zweiten Eingang (13b) einer dritten Koppelstufe (13) zugeführt wird, und daß das zweite Timersignal (T₂) und das vierte Timersignal (T₄) je einem Eingang (12a, 12b) einer vierten Koppelstufe (12) zugeführt werden, deren Ausgang (12c) mit dem zweiten Eingang (11b) des Speicher-Flip-Flops (10, 11) verbunden ist, wobei die dritte und vierte Koppelstufe (13, 12) mit dem Speicher-Flip-Flop (10, 11) so zusammenwirken, daß für den Fall, daß der Brotröster weder durch das Röstzeit-Steuersignal (A) noch durch das Aufbackzeit-Steuersignal (B) bereits außer Betrieb gesetzt wurde, zum Zeitpunkt des zweiten Wechsels des zweiten Timersignals (T₂) von LOW nach HIGH durch ein Zwangsabschalt-Steuersignal (Z) außer Betrieb gesetzt wird, welches vom zweiten Ausgang (11c) des Speicher-Flipflops (10, 11) dem ersten Eingang (13a) der dritten Koppelstufe (13) zugeführt wird.

12. Brotröster nach Anspruch 11,
**dadurch gekennzeichnet**,
daß der vierten Koppelstufe (12) ein aus einem Kondensator (24) und einem Widerstand (25) bestehendes Zeitglied nachgeschaltet ist.

13. Brotröster nach Anspruch 11,
**dadurch gekennzeichnet**,
daß die Koppelstufen (9, 12, 13, 14) und das Speicher-Flip-Flop (10, 11) aus NAND-Gattern bestehen.

14. Brotröster nach Anspruch 1,
**dadurch gekennzeichnet**,
daß vom Zeitpunkt der Inbetriebnahme des Brotrösters an gerechnet der zweite festlegbare Zeitpunkt (t₂) eine Minute beträgt.

## Claims

1. A bread toaster comprising a housing which, with the exception of at least one loading and unloading opening provided for an item to be toasted, encloses almost completely a toasting chamber with a heating device arranged therein, comprising a sensor (1) responsive in the infrared radiation zone which, in conjunction with a comparator circuit (3, 4, 17), is able to control the toasting time of an item to be toasted that is introduced into the toasting chamber by receiving the infrared radiation that emits from the heated item being toasted, by delivering a sensor signal (Uₛ) derived therefrom to the comparator circuit (3, 4, 17) and by comparing it with a reference voltage in a first comparator (4), the said first comparator (4) issuing a toasting-time control signal (R) responsive to this comparison which is applied to a first input (15a) of a stage (8, 15) which latter, in turn, disables the bread toaster upon attainment of a signal level of the sensor signal (Uₛ) that is adjustable by the user of the bread toaster,
characterized in that, in a manner known per se, a retaining means for an item to be warmed up can be mounted on top of the loading and unloading opening, and in that a control circuit is provided in addition which, at a first definable moment (t₁) after start-up of the bread toaster, compares the sensor signal (Uₛ) which it is also supplied with in a second comparator (5) with a reference signal (U_{c}), whereupon in the event that the reference signal (U_{c}) is less than the sensor signal (Uₛ) the bread toaster is de-activated by a warming-up time control signal (A) which is produced by the control circuit at a second definable moment (t₂) and which is applied to a second input (15b) of the stage (8, 15), while in the opposite case the bread toaster is de-activated by the toasting-time control signal (R) which is produced by the comparator circuit (3, 4, 17) after the signal level adjusted for the sensor signal (Uₛ) has been reached, and in that the respective toasting-time control signal (R) and a signal derived from the respective output signal (U_{A}) of the second comparator (5) are supplied to a first coupling stage (14) which is connected in front of the stage (8, 15) and ensures that the stage (8, 15) in the toasting operation is responsive only to variations of the toasting-time control signal (R) and in the warming-up operation is responsive only to variations of the warming-up time control signal (A).

2. A bread toaster as claimed in claim 1,
characterized in that the control circuit comprises a timer (16) which, upon start-up of the bread toaster at the moment t = 0, issues at a first output (16a) a first periodic timer signal (T₁) and issues at a second output (16b) a second periodic timer signal (T₂), whose levels start with LOW each and alternate to HIGH at the first (t₁) and/or the second (t₂) definable moment, with both timer signals (T₁, T₂) each having the same duration of pulse and pause, and in that the control circuit comprises a second comparator (5) whose negative input is furnished with the sensor signal (Uₛ) and whose positive input is furnished with the reference signal (U_{c}), and whose output signal (U_{A}) is delivered to a first input (9a) of a second coupling stage (9), whose second input (9b) is connected to the first output (16a) of the timer (16), and in that the output signal (U_{G}) of the second coupling stage (9) is applied to a first input (10a) of a memory flip-flop (10, 11), whose first output (10c) connects to the second input (14b) of the first coupling stage (14).

3. A bread toaster as claimed in claim 2,
characterized in that the timer (16), with the start-up of the bread toaster, issues at a third output (16c) a third periodic timer signal (T₃) having the same pulse and pause duration whose level likewise starts with LOW and is on HIGH for the duration of a time interval (Δt), and in that the control circuit includes an assembly unit (7, 44, 19, 20) which receives the sensor signal (Uₛ) at the positive input of the second comparator (5) during the time interval (Δt) and, upon lapse thereof, generates the reference signal (U_{c}).

4. A bread toaster as claimed in claim 3,
characterized in that the assembly unit (7, 44, 19, 20) is comprised of a capacitor (20) whose positive connection connects via a first resistor (44) to the supply voltage and whose negative connection connects to the output of a comparator (7), in that this assembly unit (7, 44, 19, 20) comprises a second resistor (19) connected in parallel to the capacitor (20), and in that the comparator (7) during the time interval (Δt) performs as an amplifier with the amplification factor V = 1, the positive input of which amplifier is furnished with the sensor signal (Uₛ) and its negative input being connected to the output of a third comparator (6), to the positive input of which latter the third timer signal (T₃) and to the negative input of which a reference voltage is applied and which is closed on the output side during the time interval (Δt).

5. A bread toaster as claimed in claim 4,
characterized in that the capacitor (20) is an electrolytic capacitor having little residual current.

6. A bread toaster as claimed in claim 4,
characterized in that the voltage applied to the positive connection of the capacitor (20) is stabilized by virtue of a Zener diode (52).

7. A bread toaster as claimed in claim 5,
characterized in that a clamping circuit is connected to the output of the comparator (7) which prevents that the voltage value at the negative connection of the electrolytic capacitor (20) will exceed the voltage value at said's positive connection.

8. A bread toaster as claimed in claim 7,
characterized in that the clamping circuit is comprised of a diode (18) which connects with its cathode to a voltage divider (17, 40, 39) and with its anode to the output of the comparator (7).

9. A bread toaster as claimed in claim 4,
characterized in that the first resistor (44) effective during charging of the capacitor (20) has such a resistance value that the corresponding time constant is small in relation to the time interval (Δt), and in that the second resistor (19) effective during discharging of the capacitor (20) has such a resistance value that the corresponding time constant is large in relation to the time interval (Δt).

10. A bread toaster as claimed in claim 9,
characterized in that the time interval (Δt) amounts to 4 seconds and the first definable moment (t₁) is after 8 seconds, in that further the time constant of the RC-element composed of the first resistor (44) and the capacitor (20) is in the order of magnitude of 10-1 seconds, while the time constant of the RC-element composed of the capacitor (20) and its discharge resistor (19) is in the order of magnitude of 100 seconds.

11. A bread toaster as claimed in claim 2,
characterized in that the timer (16) issues at its fourth output (16d) a fourth timer signal (T₄) which, in its signal shape, corresponds to the second timer signal (T₂), yet has the double period duration and is supplied to the second input (13b) of a third coupling stage (13), and in that the second timer signal (T₂) and the fourth timer signal (T₄) each are supplied to an input (12a, 12b) of a fourth coupling stage (12), whose output (12c) is connected to the second input (11b) of the memory flip-flop (10, 11), with the third and the fourth coupling stage (13, 12) cooperating with the memory flip-flop (10, 11) in such a fashion that, in the event that the bread toaster has not already been de-activated by either the toasting-time control signal (A) or the warming-up time control signal (8), the bread toaster will be switched off at the point of time of the second change of the second timer signal (T₂) from LOW to HIGH by an automatic switch-off control signal (Z) which is delivered from the second output (11c) of the memory flip-flop (10, 11) to the first input (13a) of the third coupling stage (13).

12. A bread toaster as claimed in claim 11,
characterized in that inserted after the fourth coupling stage (12) is a time function element comprised of a capacitor (24) and a resistor (25).

13. A bread toaster as claimed in claimed 11,
characterized in that the coupling stages (9, 12, 13, 14) and the memory flip-flop (10, 11) are composed of NAND-gates.

14. A bread toaster as claimed in claim 1,
characterized in that the second definable moment (t₂) is after one minute calculated from the moment of start-up of the bread toaster.

## Revendications

1. Grille-pain comprenant un boîtier, qui enferme pratiquement complètement une chambre de grillage avec un appareil de chauffage agencé dans celle-ci, à l'exception d'au moins une ouverture d'entrée et de sortie pour des produits à griller, un détecteur (1) sensible dans la gamme de rayonnement infrarouge, qui peut commander ensemble avec un circuit de comparaison (3, 4, 17) le temps de grillage d'un produit mis dans la chambre de grillage, par le fait qu'il reçoit le rayonnement intrarouge émis par le produit chauffé, qu'il fournit au circuit de comparaison (3, 4, 17) un signal de détection (Uₛ) dérivé dudit rayonnement infrarouge, qu'il compare ce dernier signal dans un premier comparateur (4) avec une tension de référence, le premier comparateur (4) fournissant un signal de commande de temps de grillage (R) dépendant de cette comparaison, signal qui est fourni à une première entrée (15a) d'un étage de commutation (8, 15) qui met de son côté le grille-pain à l'arrêt lorsqu'on atteint un niveau de signal du signal de détecteur (Uₛ) réglable par l'utilisateur du grille-pain, caractérisé en ce que d'une manière connue en soi, on peut monter à travers l'ouverture d'entrée/sortie un dispositif de maintien pour le produit à griller, et en ce qu'il est additionnellement prévu un circuit de commande qui compare le signal de détecteur (Uₛ), qui lui est également fourni, à un premier instant déterminable (T₁) après mise en service du grille-pain dans un second comparateur (5) et avec un signal de référence (U_{c}), le grille-pain étant mis à l'arrêt dans le cas où le signal de référence (U_{c}) est inférieur au signal de détecteur (Uₛ), par un signal de commande de temps de cuisson (A) produit par le circuit de commande à un second instant déterminable (T₂) et alimenté à une seconde entrée (15b) de l'étage de commutation (8, 15), tandis que dans le cas inverse, la mise à l'arrêt du grille-pain après avoir atteint le niveau de signal réglé pour le signal de détecteur (Uₛ) est déclenchée par le signal de commande de temps de grillage (R) produit par le circuit comparateur (3, 4, 17), et en ce que le signal de commande de temps de grillage (R) respectif et un signal dérivé du signal de sortie respectif (U_{A}) du second comparateur (5) sont admis à un premier étage de couplage (14) branché en amont de l'étage de commutation (8, 15), cet étage de couplage ayant pour rôle que lors du fonctionnement en grillage, l'étage de commutation (8, 15) n'est sensible qu'à des modifications du signal de commande du temps de grillage (R) et que lors du fonctionnement en cuisson, il n'est sensible qu'aux modifications du signal de commande du temps de cuisson (A).

2. Grille-pain selon la revendication 1, caractérisé en ce que le circuit de commande comprend un temporisateur (16) qui délivre avec la mise en service du grille-pain à l'instant t = 0 un premier signal de temporisation périodique (T₁) à une première sortie (16a), et un second signal de temporisation périodique (T₂) à une seconde sortie (16b), dont les niveaux commencent respectivement avec une valeur basse (LOW) et changent à une valeur haute (HIGH) au premier instant déterminable (t₁) ou au second instant déterminable (t₂) respectivement, les deux signaux de temporisation (T₁, T₂) ayant chacun une même durée d'impulsion et de pause, et en ce que le circuit de commutation comprend un second comparateur (5), à l'entrée négative duquel est admis le signal de détecteur (Uₛ) et à l'entrée positive duquel est admis le signal de référence (U_{c}), et dont le signal de sortie (U_{A}) est conduit à une première entrée (9a) d'un second étage de couplage (9), dont la seconde entrée (9b) est reliée à la première sortie (16a) du temporisateur (16), et en ce que le signal de sortie (U_{G}) du second étage de couplage (9) est admis à une première entrée (10a) d'une mémoire à bascule (10, 11) dont la première sortie (10c) est reliée à la seconde entrée (14b) du premier étage de couplage (14).

3. Grille-pain selon la revendication 2, caractérisé en ce que le temporisateur (16) délivre lors de la mise en service du grille-pain à une troisième sortie (16c) un troisième signal de temporisation (T₃) périodique et ayant des durées d'impulsion et de pause égales, dont le niveau commence également à une valeur basse (LOW) et est situé à un niveau haut (HIGH) pour la durée d'un intervalle de temps (Δt), et en ce que le circuit de commande contient un ensemble (7, 44, 19, 20) qui reprend le signal de détecteur (Uₛ) à l'entrée positive du second comparateur (5) pendant l'intervalle de temps (Δt), et produit le signal de référence (U_{c}) après son expiration.

4. Grille-pain selon la revendication 3, caractérisé en ce que l'ensemble (7, 44, 19, 20) comprend un condensateur (20) dont la borne plus est reliée via une première résistance (44) à la tension de service et dont la borne moins est reliée à la sortie d'un comparateur (7), en ce que l'ensemble (7, 44, 19, 20) comprend une seconde résistance (19) raccordée en parallèle au condensateur (20), et en ce que le comparateur (7) est pendant l'intervalle (Δt) un amplificateur qui fonctionne avec le rapport d'amplification V = 1, à l'entrée positive duquel est admis le signal de détecteur (Uₛ) et dont l'entrée négative est reliée à la sortie d'un troisième comparateur (6), à l'entrée positive duquel est appliqué le troisième signal de temporisation (T₃) et à l'entrée négative duquel est appliquée une tension de comparaison, et ledit troisième comparateur étant bloqué du côté de la sortie à l'intérieur de l'intervalle de temps (Δt).

5. Grille-pain selon la revendication 4, caractérisé en ce que le condensateur (20) est un condensateur électrolytique qui présente un faible courant résiduel.

6. Grille-pain selon la revendication 4, caractérisé en ce que la tension appliquée à la borne plus du condensateur (20) est stabilisée au moyen d'une diode Zener (52).

7. Grille-pain selon la revendication 5, caractérisé en ce qu'un circuit de blocage est raccordé à la sortie du comparateur (7), lequel empêche que la valeur de la tension à la borne négative du condensateur électrolytique (20) puisse devenir supérieure à la valeur de la tension à sa borne positive.

8. Grille-pain selon la revendication 7, caractérisé en ce que le circuit de blocage comprend une diode (18) qui est raccordée par sa cathode à un diviseur de tension (17, 40, 39) et par son anode à la sortie du comparateur (7).

9. Grille-pain selon la revendication 4, caractérisé en ce que la première résistance (44) active lors d'une charge du condensateur (20) présente une telle valeur de résistance que la constante de temps correspondante est faible par rapport à l'intervalle de temps (Δt), et en ce que la seconde résistance (19) active lors d'une décharge du condensateur (20) présente une telle valeur de résistance que la constante de temps correspondante est importante par rapport à l'intervalle de temps (Δt).

10. Grille-pain selon la revendication 9, caractérisé en ce que l'intervalle de temps (Δt) est égal à 4 secondes et le premier instant déterminable (t₁) est égal à 8 secondes, en ce qu'en outre la constante de temps du circuit RC formé par la première résistance (44) et le condensateur (20) est de l'ordre de grandeur de 10⁻¹ sec., tandis que la constante de temps du circuit RC constitué par le condensateur (20) et sa résistance de décharge (19) est de l'ordre de grandeur de 100 sec.

11. Grille-pain selon la revendication 2, caractérisé en ce que le temporisateur (16) délivre un quatrième signal de temporisation (T₄) à une quatrième sortie (16d), lequel correspond dans sa forme de signal au second signal de temporisation (T₂) mais a la durée de période double, et est admis à la seconde entrée (13b) d'un troisième étage de couplage (13), et en ce que le second signal de temporisation (T₂) et le quatrième signal de temporisation (T₄) sont fournis à l'une des entrées respectives (12a, 12b) d'un quatrième étage de couplage (12), dont la sortie (12c) est reliée à la seconde entrée (11b) de la mémoire à bascule (10, 11), le troisième et le quatrième étage de couplage (13, 12) coopérant avec la mémoire à bascule (10, 11) de telle manière que dans le cas où le grille-pain n'a pas encore été mis hors de fonctionnement ni par le signal de commande du temps de grillage (A) ni par le signal de commande du temps de cuisson (B), il est mis hors de fonctionnement à l'instant du second changement du second signal de temporisation (T₂) du niveau bas (LOW), vers le niveau haut (HIGH) par un signal de commande (Z) d'arrêt impératif, qui est admis depuis la seconde sortie (11c) de la mémoire à bascule (10, 11) à la première entrée (13a) du troisième étage de couplage (13).

12. Grille-pain selon la revendication 11, caractérisé en ce qu'un circuit de temporisation constitué par un condensateur (24) et une résistance (25) est raccordé en aval du quatrième étage de couplage (12).

13. Grille-pain selon la revendication 11, caractérisé en ce que les étages de couplage (9, 12, 13, 14) et la mémoire à bascule (10, 11) sont constitués par des portes NON-ET (NAND).

14. Grille-pain selon la revendication 1, caractérisé en ce que le second instant déterminable (t₂) calculé depuis l'instant de la mise en service du grille-pain est égal à une minute.
